# EUROPÄISCHE PATENTANMELDUNG

(11) **EP 0 710 919 A2**
(43) Veröffentlichungstag der Anmeldung: **08.05.1996**
(21) Anmeldenummer: 95116421.9
(22) Anmeldetag: 18.10.1995
(51) Int. Cl.: G06K 13/077

(54) **Kontaktloses elektronisches Modul**

(30) Priorität: 21.10.1994 DE 4437721
(71) Anmelder: Giesecke & Devrient GmbH, D-81677 München (DE)
(72) Erfinder: Hoppe, Joachim, D-81667 München (DE); Hohmann, Arno, D-81369 München (DE)
(74) Vertreter: Klunker . Schmitt-Nilson . Hirsch

(57) **Zusammenfassung**

Es wird ein elektronisches Modul zum Einbau in einen Datenträger beschrieben, wobei das elektronische Modul einen auf einem Träger des Moduls angeordneten integrierten Schaltkreis aufweist, der leitend mit einer Spule für den berührungslosen Datenaustausch verbunden ist. Um derartige elektronische Module einfach herstellbar und kostengünstiger zu gestalten, wird beim erfindungsgemäßen Modul auf ein zusätzliches separates Substrat zur Aufnahme des integrierten Schaltkreises und der Spule gänzlich verzichtet.

## Beschreibung

Die Erfindung betrifft ein elektronisches Modul für den Einbau in einen Datenträger mit einem auf einem Träger des Moduls angeordneten integrierten Schaltkreis, der leitend mit einer Spule für den berührungslosen Datenaustausch des Datenträgers mit einem externen Gerät verbunden ist. Die Erfindung betrifft ferner einen Datenträger mit einem entsprechenden elektronischen Modul.

Datenträger, in die ein elektronisches Modul eingebaut ist, sind bereits hinlänglich bekannt und werden als Kreditkarten, Bankkarten, Barzahlungskarten und dergleichen in den verschiedensten Dienstleistungssektoren, beispielsweise im bargeldlosen Zahlungsverkehr oder im innerbetrieblichen Bereich als Zugangsberechtigung verwendet. Bei einem Großteil dieser Datenträger erfolgt die Energieversorgung des elektronischen Moduls und/oder der Datenaustausch mit externen Geräten berührend über äußere Kontaktflächen. Da bei diesen Datenträgern die Kontaktflächen des Moduls freiliegen, können diese verschmutzen, wodurch infolge einer schlechten Kontaktierung eine fehlerhafte Datenübertragung zwischen dem Datenträger und dem externen Gerät auftreten kann. Ferner kann eine fehlerhafte Datenübertragung auch aufgrund einer fehlerhaften Positionierung des Datenträgers und damit der Kontaktflächen im externen Gerät auftreten. Schließlich kann ein Datenaustausch zwischen dem Datenträger und dem externen Gerät nicht über eine größere Distanz erfolgen, wie es für einige Anwendungen gewünscht ist. Es werden deshalb auch elektronische Module für den berührungslosen Datenaustausch in Datenträgern verwendet.

Die EP 376 062 beschreibt beispielsweise ein derartiges elektronisches Modul mit induktiver Kopplung, bei dem auf einem Substrat eine Spule und ein integrierter Schaltkreis aufgeklebt sind. Der integrierte Schaltkreis befindet sich im Innenraum der Spule und ist durch Bonddrähte leitend mit dieser verbunden. Der verbleibende Innenraum der Spule ist zum Schutz der empfindlichen Bestandteile des Moduls vor mechanischen Belastungen mit einer Vergußmasse aufgefüllt, wobei die Spule als Begrenzungsrahmen für die Gußmasse genutzt wird.

Ein anderes elektronisches Modul mit induktiver Kopplung ist in der WO 93/20537 dargestellt. Hierbei wird eine gewickelte Spule verwendet, deren Größe im wesentlichen den Außenabmessungen des Kartenkörpers entspricht. In einer abgeflachten Ecke der Spule ist über einen Heißkleber ein Substrat an der Spule fixiert. Die Spulenenden sind über einer Aussparung des Substrates verklebt. Der integrierte Schaltkreis ist in die Aussparung des Substrats eingesetzt und leitend mit den über der Aussparung verlaufenden Spulenenden verbunden.

Bei dem genannten Stand der Technik wird also ein separates zusätzliches Trägersubstrat benötigt, auf dem der integrierte Schaltkreis und die Spule angeordnet sind.

Aufgabe der vorliegenden Erfindung ist es, hiervon ausgehend ein einfach herzustellendes und kostengünstiges elektronisches Modul für die kontaktlose Kopplung und einen Datenträger mit entsprechendem Modul vorzuschlagen.

Die Aufgabe wird durch die in den nebengeordneten Ansprüchen 1, 7 und 16 angegebenen Merkmale gelöst.

Der Grundgedanke der erfindungsgemäßen Lösung besteht darin, bei der Herstellung des elektronischen Moduls auf ein zusätzliches separates Substrat zur Aufnahme von integriertem Schaltkreis und Spule gänzlich zu verzichten, wobei der integrierte Schaltkreis dennoch durch das Modul getragen wird.

Ein Vorteil der vorliegenden Erfindung ist es, daß ohne Verwendung eines zusätzlichen separaten Trägersubstrats für integrierten Schaltkreis und Spule ein stabiles und leicht herstellbares elektronisches Modul erhalten wird. Darüber hinaus ist das Modul leicht an verschiedene Größen des integrierten Schaltkreises adaptierbar, da der integrierte Schaltkreis nicht in einer vorher definierten Aussparung eines separaten Trägersubstrates untergebracht sein muß. Vielmehr kann der integrierte Schaltkreis beliebig auf dem Modul angeordnet sein. Hierdurch kann der integrierte Schaltkreis optimal plaziert werden, beispielsweise in einem Bereich, in dem im Datenträger möglichst wenig mechanische Beanspruchungen auftreten.

Gemäß einer ersten Ausführungsform ist der integrierte Schaltkreis mit einem Kleber, z.B. einem Heißkleber oder einem Flüssigkleber, auf einer gewickelten Spule, deren Spulendrähte von einem Isolierlack umgeben sind, fixiert und mit den Enden dar Spule leitend verbunden. Die Spule ist selbsttragend ausgeführt und bedarf keines separaten zusätzlichen Trägersubstrats. Wahlweise kann die Fixierung mit einem Kleber auch unterbleiben, so daß der integrierte Schaltkreis nur durch die Spulenenden gehalten wird. Die Spule bildet hierbei allein den Träger für den integrierten Schaltkreis. Die Spulenenden können entweder direkt mit den Anschlußpunkten des integrierten Schaltkreises verbunden werden oder aber auch über eine leitende Brücke. Werden nur wenige Windungen benötigt, so kann die Spule auch einlagig ausgeführt sein und so mit dem integrierten Schaltkreis verbunden sein, daß der Spulendraht dabei nicht gekreuzt wird. Die Spule kann im Bereich des integrierten Schaltkreises mit einer Vergußmasse vergossen werden. In einer Weiterbildung kann der integrierte Schaltkreis auch in der Ebene der Spule angeordnet sein, so daß die Spule den integrierten Schaltkreis seitlich umschließt oder der integrierte Schaltkreis seitlich neben der Spule angebracht ist.

Bei weiteren Ausführungsformen werden eine oder mehrere Spulen aus einem selbsttragenden Metallband ausgestanzt. Der Begriff selbsttragendes Metallband bedeutet hier, daß das Metallband mit keinem weiteren Substrat verbunden ist, das dieses trägt. Der integrierte Schaltkreis ist entweder über zusätzliche elektrisch leitende Bonddrähte, z.B. in der Wire-Bonding- oder TAB-Technik oder aber direkt mit den Spulenenden leitend verbunden. In jedem Fall wird der integrierte Schaltkreis von dem Metallband getragen. Dies ist einerseits möglich, indem der integrierte Schaltkreis direkt von der Spule getragen wird. Hierbei kann sich der integrierte Schaltkreis entweder teilweise auf der Spule befinden und mit den Spulenenden über zusätzliche elektrisch leitende Elemente verbunden sein oder er wird direkt mit den Spulenenden leitend verbunden, wobei er vorzugsweise von diesen getragen werden kann. Andererseits kann der integrierte Schaltkreis bei einer aus einem Metallband hergestellten Spule in einem besonders dafür vorgesehenen Bereich des Metallbandes angeordnet werden, der entweder Teil der Spule ist, oder sich außerhalb der Spule befindet. Wahlweise können auch hier der integrierte Schaltkreis sowie die leitenden Verbindungen zwischen Spule und integriertem Schaltkreis mit einer Vergußmasse vergossen sein.

Der Einbau der beschriebenen Module in einen Datenträger erfolgt vorzugsweise in Laminiertechnik. Hierbei werden mehrere Kartenschichten durch die Einwirkung von Wärme und Druck miteinander verbunden. Die Kernschichten des Aufbaus enthalten zur Aufnahme des elektronischen Moduls geeignete Aussparungen. Natürlich können auch andere dem Fachmann hinlänglich bekannte Techniken zur Einbettung des elektronischen Moduls angewandt werden, wie z. B. die Spritzgußtechnik oder die Kaltgußtechnik.

Ausführungsformen und weitere Vorteile der Erfindung ergeben sich aus den Unteransprüchen sowie den Zeichnungen. Darin zeigen:
- Fig. 1: Aufriß eines Datenträgers mit einer ersten Ausführungsform eines elektronischen Moduls mit drahtgewickelter Spule und integriertem Schaltkreis,
- Fig. 2: Schnittdarstellung des Datenträgers mit Modul aus Fig. 1,
- Fig. 3: Ausschnitt der Verbindung zwischen Spulenende und den Anschlußpunkten des integrierten Schaltkreises des Moduls aus Fig. 2,
- Fig. 4: Weiterbildung eines elektronischen Moduls nach den Fig. 1 - 3 mit seitlich der Spule angeordneten integrierten Schaltkreis,
- Fig. 5: zweite Ausführungsform eines gestanzten elektronischen Moduls, wobei die Spule, aus einem selbsttragenden Metallband erhalten wird,
- Fig. 6: Schnitt des elektronischen Moduls gemäß Fig. 5,
- Fig. 7: dritte Ausführungsform eines gestanzten elektronischen Moduls,
- Fig. 8: vierte Ausführungsform eines gestanzten elektronischen Moduls,
- Fig. 9: das elektronische Modul gemäß Fig. 8 in der Schnittdarstellung, wobei die Spule über dem Gußblock abgewinkelt ist,
- Fig. 10 - 12: fünfte Ausführungsform eines kontaktlosen elektronischen Moduls,
- Fig. 13: sechste Ausführungsform eines kontaktlosen elektronischen Moduls mit zusätzlichen Kontaktflächen.

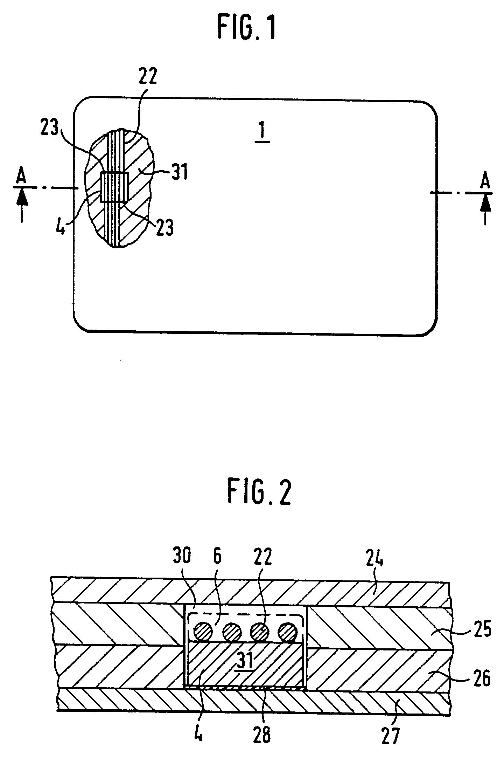

Fig. 1 zeigt im Aufriß einen Datenträger 1, z. B. eine Chipkarte mit einem eingebetteten, kontaktlosen elektronischen Modul 31. In dieser ersten Ausführungsform umfaßt das elektronische Modul 31 einen integrierten Schaltkreis 4 und eine drahtgewickelte Spule 22, wobei der integrierte Schaltkreis 4 direkt auf der gewickelten Spule 22 aufliegt. Wahlweise kann der integrierte Schaltkreis 4 zusätzlich auch über einen Heißkleber oder einen Flüssigkleber mit der Spule 22 verklebt sein. Der Spulendraht der gewickelten Spule 22 ist mit einem Isolierlack umhüllt, um einen Kurzschluß zwischen den Spulendrähten zu verhindern. Die Enden der Spule sind leitend mit den Anschlußpunkten des integrierten Schaltkreises 4 verbunden. Die Spule 22 ist im Bereich des integrierten Schaltkreises 4 mit einer Vergußmasse 6 vergossen, wie dies in Fig. 2 zu sehen ist.

Fig. 2 zeigt einen Schnitt des Datenträgers gemäß Fig. 1 entlang der Linie A - A. Der Verguß 6 kann durch eine aus zwei Gußformhälften bestehende Form hergestellt werden, die zusammengefügt einen geschlossenen Raum bildet. Die Gußform ist so ausgeführt, daß eine Gußformhälfte eine Aussparung zur Aufnahme des integrierten Schaltkreises 4 aufweist und daß durch das Aufsetzen der zweiten Gußformhälfte der geschlossene Raum entsteht, der eine Öffnung zur Durchführung der gewickelten Spule 22 aufweist. Das Vergießen erfolgt durch Einspritzen einer Vergußmasse in die geschlossene Gußform und Abnehmen der Gußform nach dem Aushärten der Vergußmasse. Die Gußform kann beispielsweise aus Metall oder Kunststoff gefertigt sein und vor dem Vergießen mit einem Trennmittel versehen werden, um ein Anhaften der Vergußmasse an der Gußform zu verhindern. Soll auf ein Trennmittel verzichtet werden, so kann die Gußform auch aus Silikon gefertigt sein.

Wie aus Fig. 2 weiterhin zu ersehen ist, liegt das elektronische Modul 31 in der dafür vorgesehene Aussparung 30 der Kartenschichten 25, 26. Der integrierte Schaltkreis 4 ist über einen Kleber 28 an der Schicht 27 befestigt. Die Kartenschichten 24, 25, 26, 27 sind durch Heißkleber oder Flüssigkleber miteinander verbunden.

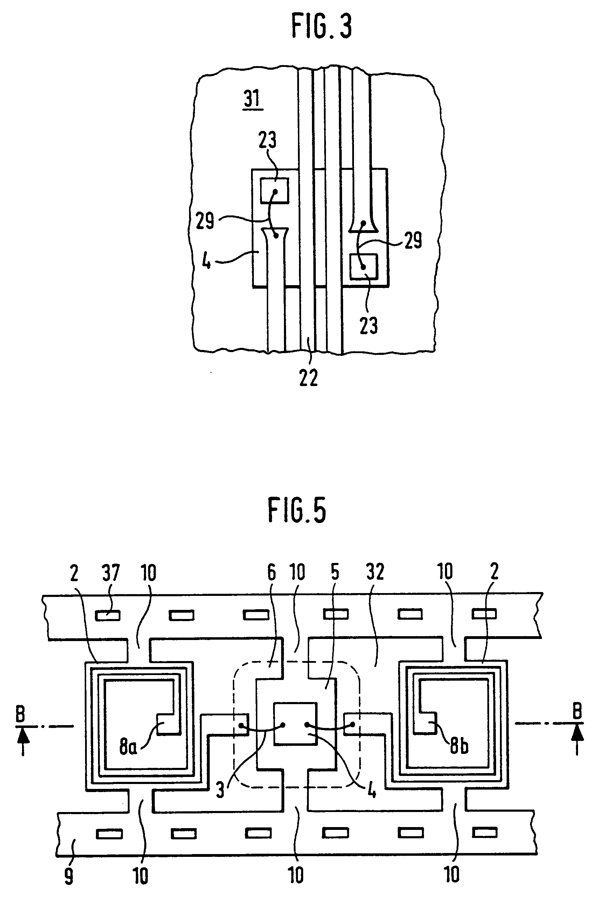

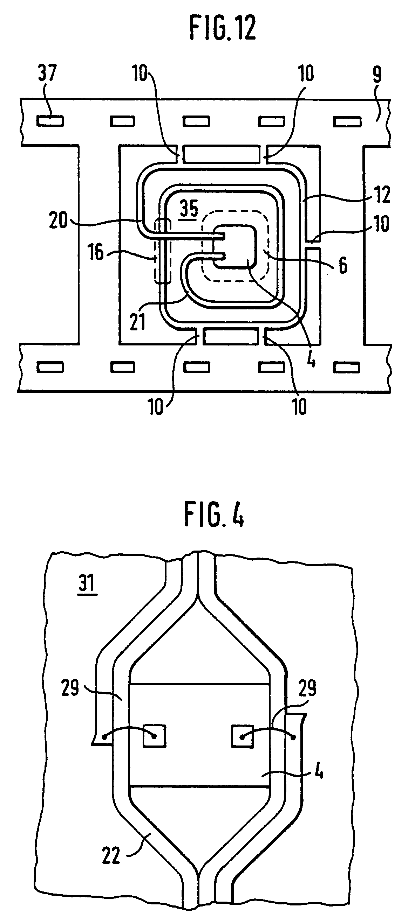

Fig. 3 zeigt die Verbindung zwischen Spulenende und den Anschlußpunkten des integrierten Schaltkreises 4. Die Enden der Spule 22 sind hierbei über Bonddrähte 29 elektrisch leitend mit den Anschlußpunkten 23 des integrierten Schaltkreises 4 verbunden. Um die Kontaktierflächen der Spulenenden zu vergrößern, sind diese an den Enden abgeflacht. In einer nicht gezeigten Ausführungsform können die Spulenenden mit den Anschlußpunkten des integrierten Schaltkreises 4 auch über Leiter verbunden werden, wobei die Leiter in der dem Fachmann bekannten TAB-Technik (Tape Automated Bonding) aufgebracht werden können.

Fig. 4 zeigt eine Weiterbildung des elektronischen Moduls 31 aus den Fig. 1 - 3. Der integrierte Schaltkreis 4 ist hierbei in einer Ebene mit der Spule 22 angeordnet. Dies hat den besonderen Vorteil, daß eine sehr dünne Bauform erreicht werden kann. Natürlich kann der integrierte Schaltkreis 4 auch direkt mit den Enden der Spule 22 verbunden werden. Ein Verguß 6 könnte in analoger Weise wie oben beschrieben erzeugt werden. Die zwei Gußformhälften sollten so ausgeführt sein, daß die geschlossene Gußform sowohl den integrierten Schaltkreis 4, wie auch die Spule 22 im Bereich des integrierten Schaltkreises 4 umschließt, wobei die Gußform Öffnungen zur Hindurchführung der Spule 22 aufweist.

Fig. 5 zeigt ein zweites Ausführungsbeispiel eines erfindungsgemäßen Moduls 32. Hierbei wird die Spule 2 aus einem selbsttragenden Metallband 9 hergestellt, z.B. durch derartiges Stanzen, daß die Spule 2 noch über Stege 10 mit dem selbsttragenden Metallband 9 verbunden ist. Zur genauen Positionierung des Metallbandes 9 weist dieses zusätzliche Positionierlöcher 37 auf. Auf dem spulenfreien zentralen Bereich 5 des Metallbandes kann z.B. der integrierte Schaltkreis 4 angeordnet und über Bonddrähte 3 mit den Spulenenden der Spule 2 leitend verbunden werden. Die Bonddrähte 3, die Spulenenden, der integrierte Schaltkreis 4 sowie der zentrale Bereich 5 des Metallbandes 9 können mit einer Vergußmasse 6 zu einem Gußblock vergossen werden. Ein derartiger Verguß 6 kann beispielsweise hergestellt werden, indem auf beiden Seiten des Metallbandes 9 eine Gußformhälfte plaziert wird, die mit der gegenüberliegenden Gußformhälfte einen geschlossenen Raum bildet, wobei die Gußformhälften in geschlossenem Zustand Öffnungen für die Stege 10 und die Spulenenden der Spulen 2 aufweisen. Das Vergießen erfolgt in analoger Weise zur ersten Ausführungsform. Auch die Gußformhälften sind aus den gleichen Materialien hergestellt.

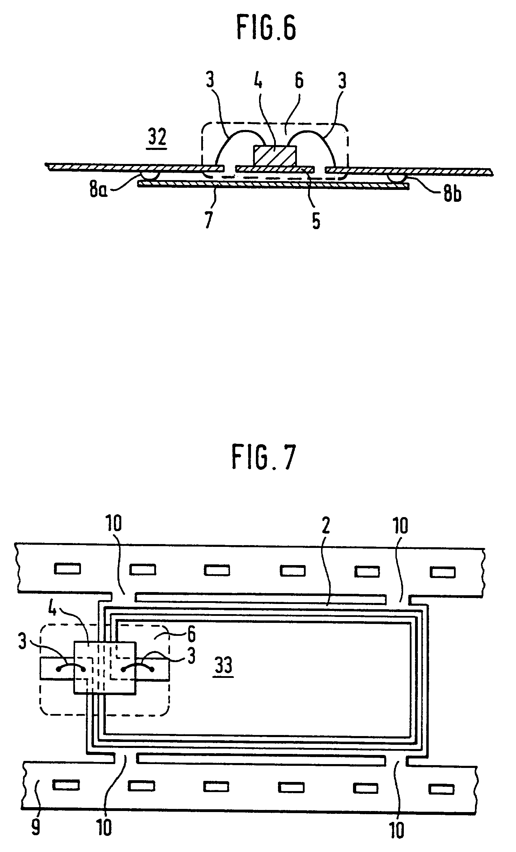

Zur Fertigstellung des Moduls 32 werden die verbindenden Stege 10 durchtrennt und die beiden inneren Enden 8 der Spulen 2 leitend miteinander verbunden, wie dies aus Fig. 6 zu ersehen ist.

Fig. 6 zeigt einen Schnitt des Moduls 32 aus Fig. 5 entlang der Linie B - B. Die beiden inneren Enden der Spulen 8a, 8b sind über die Kontaktbrücke 7 leitend miteinander verbunden. Die Kontaktbrücke 7 kann zwischen den beiden Anschlußpunkten 8a, 8b elektrisch isoliert sein, um Kurzschlüsse zu vermeiden.

Fig. 7 zeigt eine dritte Ausführungsform eines gestanzten, kontaktlosen elektronischen Moduls 33. Hierbei ist analog zu demjenigen aus Fig. 5 eine Spule 2 aus dem selbsttragenden Metallband 9 ausgestanzt, jedoch ist der integrierte Schaltkreis 4 im Unterschied zur Fig. 5 zumindest teilweise direkt auf der Spule 2 angeordnet und über die Bonddrähte 3 mit den Enden der Spule 2 leitend verbunden.

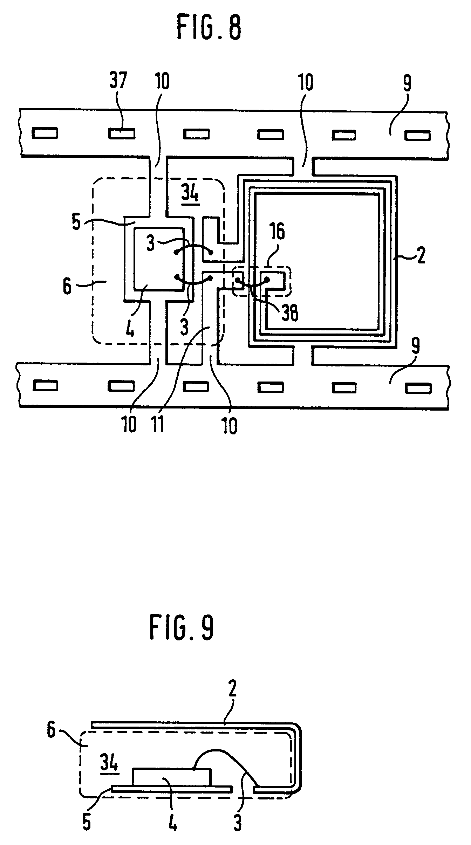

Fig. 8 zeigt eine vierte Ausführungsform eines gestanzten, kontaktlosen elektronischen Moduls 34, welches nur eine Spule aufweist. Es wird analog zu demjenigen in Fig. 5 beschriebenen hergestellt. Um die leitende Verbindung zwischen dem integrierten Schaltkreis 4 und dem inneren Ende der Spule 2 nicht zu lang werden zu lassen, ist zusätzlich die Kontaktbrücke 11 vorgesehen. Diese wird leitend über Bonddrähte 3, 38 sowohl mit dem integrierten Schaltkreis 4 wie auch mit dem inneren Ende der Spule 2 verbunden. Im Bereich des Bonddrähtchens 38 ist die Spule 2 sowie die Kontaktbrücke 11 mit einem isolierenden Lack 16 versehen.

Fig. 9 zeigt eine vorteilhafte Weiterbildung des elektronischen Moduls 34 aus Fig. 8, bei dem die Spule 2 am Gußblock der Vergußmasse 6 derart abgewinkelt ist, daß die Spule 2, wie hier gezeigt, auf dem Gußblock der Vergußmasse 6 liegt. Dadurch wird ein elektronisches Modul 34 mit einem kompakten Aufbau erhalten.

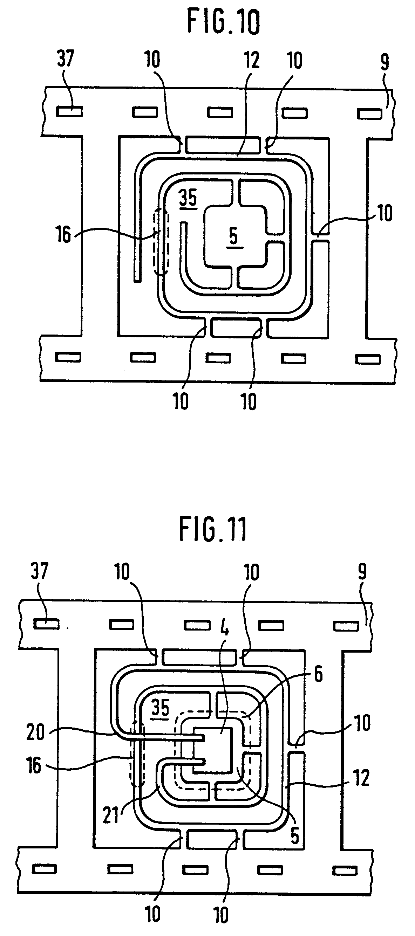

Fig. 10 zeigt die Ausstanzung einer Spule aus einem selbsttragenden Metallband, die für eine fünfte Ausführungsform eines kontaktlosen elektronischen Moduls 35 geeignet ist.

Fig. 11 zeigt das fertige elektronische Modul 35 mit der nach Fig. 10 vorgefertigten Spule. Die Herstellung des Moduls erfolgt im wesentlichen analog zu demjenigen aus Fig. 5. Der integrierte Schaltkreis 4 ist auf einem Bereich 5 des Metallbandes angeordnet, der auch als Träger des integrierten Schaltkreises 4 dient. Abweichend von demjenigen in Fig. 5 ist die leitende Verbindung zwischen integriertem Schaltkreis 4 und Spule 12 nicht über Bonddrähte realisiert ist, sondern die Spulenenden sind direkt mit dem integrierten Schaltkreis 4 leitend verbunden. Hierzu sind die Spulenenden 20 und 21 entsprechend gebogen. In demjenigen Bereich, in dem das Spulenende 20 auf den Spulenwindungen 20 liegt, ist ein isolierender Lack 16 aufgetragen, um einen Kurzschluß der Spule zu verhindern.

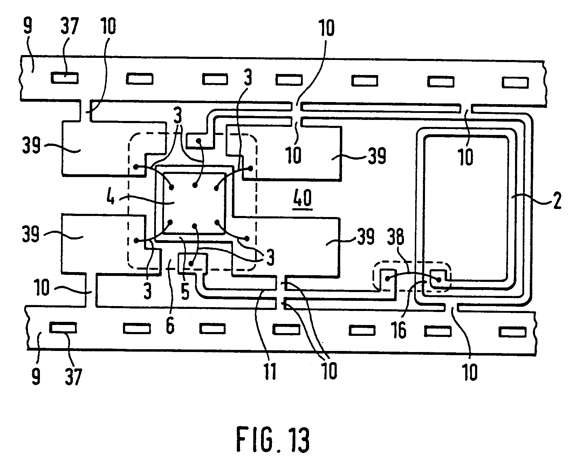

Fig. 12 zeigt eine Weiterbildung der Ausführungsform gemäß Fig. 11. Hierbei kann der Bereich 5 des Metallbandes auch entfallen, wobei der integrierte Schaltkreis 4 dann von den Spulenenden 20, 21 getragen wird.

Fig. 13 zeigt eine sechste Ausführungsform eines gestanzten, kontaktlosen elektronischen Moduls 40. In diesem sind neben der Spule 2 zusätzlich Kontaktflächen 39 zur berührenden Kontaktierung des integrierten Schaltkreises 4 mit externen Geräten vorgesehen, so daß der integrierte Schaltkreis 4 sowohl mit nichtberührend arbeitenden wie auch mit berührend arbeitenden externen Geräten kommunizieren kann.

Auch dieses elektronische Modul ist analog zu den elektronischen Modulen gemäß Fig. 5, 7, 8, 10 und 12 gefertigt und wird fertiggestellt, indem die Stege 10 durchtrennt werden. Selbstverständlich können die gezeigten Kontaktflächen 39 auch in den Modulen gemäß Fig. 5, 7, 8, 10 und 12 vorgesehen werden.

Abschließend ist zu bemerken, daß die Erfindung nicht auf die gezeigten Ausführungsformen beschränkt ist. Beispielsweise kann bei den gezeigten Ausführungsformen die Vergußmasse auch weggelassen werden oder die leitenden Verbindungen zwischen integriertem Schaltkreis und Spulenenden können auch in einer anderen dem Fachmann geläufigen Technik erstellt werden. Auch können die anhand der verschiedenen Ausführungsformen beschriebenen elektronischen Module in einer anderen als in den Fig. 1 und 2 dargestellten Technik, wie beispielsweise durch Spritzguß oder Kaltguß, die dem Fachmann geläufig sind, eingebettet werden. Selbstverständlich wird dann der Kartenkörper an Stelle der gezeigten Laminiertechnik in Spritzgußtechnik oder Kaltgußtechnik hergestellt, wobei dann der Kartenkörper nun auch aus einer Schicht bestehen kann.

## Patentansprüche

1. Elektronisches Modul (31) für den Einbau in einen Datenträger (1) mit einem auf einem Träger des Moduls angeordneten integrierten Schaltkreis (4), der leitend mit einer Spule (22) für den berührungslosen Datenaustausch des Datenträgers (1) mit einem externen Gerät verbunden ist, dadurch **gekennzeichnet,** daß die Spule (22) drahtgewickelt ist, einen Querschnitt vorgegebener Dicke und Breite aufweist und selbsttragend ist und daß die Spule (22) den Träger für den integrierten Schaltkreis (4) bildet.

2. Elektronisches Modul nach Anspruch 1, dadurch **gekennzeichnet,** daß die Spulenenden mit dem integrierten Schaltkreis 4 so verbunden sind, daß der Spulendraht dabei nicht gekreuzt wird.

3. Elektronisches Modul nach Anspruch 1, dadurch **gekennzeichnet,** daß der integrierte Schaltkreis (4) in einer Ebene mit der Spule (22) liegt.

4. Elektronisches Modul nach Anspruch 1 - 3, dadurch **gekennzeichnet,** daß der integrierte Schaltkreis (4) auf bzw. an die Spule (22) auf- bzw. angeklebt ist.

5. Elektronisches Modul nach Anspruch 1 - 4, dadurch **gekennzeichnet,** daß die Spule (22) im Bereich des integrierten Schaltkreises (4) mit einer Vergußmasse (6) vergossen ist.

6. Elektronisches Modul nach einem der vorhergehenden Ansprüche, dadurch **gekennzeichnet,** daß die Spulenenden direkt mit den Anschlußpunkten (23) des integrierten Schaltkreises (4) elektrisch leitend verbunden sind oder daß die Spulenenden mittels zusätzlich elektrisch leitender Elemente (29) mit den Anschlußpunkten (23) des integrierten Schaltkreises (4) verbunden sind.

7. Elektronisches Modul (32, 33, 34, 35) für den Einbau in einen Datenträger (1) mit einem auf einem Träger des Moduls angeordneten integrierten Schaltkreis (4), der leitend mit einer Spule (2, 12) für den berührungslosen Datenaustausch des Datenträgers mit einem externen Gerät verbunden ist, dadurch **gekennzeichnet,** daß die Spule aus einem selbsttragenden Metallband (9) hergestellt ist und daß der integrierte Schaltkreis (4) auf dem aus dem Material des Metallbandes (9) bestehenden Träger (2, 5) angeordnet ist.

8. Elektronisches Modul nach Anspruch 7, dadurch **gekennzeichnet,** daß der integrierte Schaltkreis (4) zumindest teilweise auf der Spule angeordnet ist.

9. Elektronisches Modul nach Anspruch 8, dadurch **gekennzeichnet,** daß der integrierte Schaltkreis (4) von den Spulenenden getragen wird.

10. Elektronisches Modul nach Anspruch 7, dadurch **gekennzeichnet,** daß der integrierte Schaltkreis (4) im Bereich des Trägers angeordnet ist, der von der Spule nicht beansprucht wird.

11. Elektronisches Modul nach Anspruch 10, dadurch **gekennzeichnet,** daß zwei Spulen (2) vorgesehen sind, wobei jeweils ein Ende der beiden Spulen elektrisch leitend mit dem integrierten Schaltkreis (4) verbunden ist und die anderen Enden der Spulen mittels einer elektrisch leitenden Brücke (7) miteinander verbunden sind.

12. Elektronisches Modul nach einem der vorhergehenden Ansprüche, dadurch **gekennzeichnet,** daß der integrierte Schaltkreis (4) mittels zusätzlicher elektrisch leitender Elemente (3, 11) mit den Spulenenden verbunden ist oder daß der integrierte Schaltkreis (4) direkt mit den Spulenenden (20, 21) elektrisch leitend verbunden ist.

13. Elektronisches Modul nach Anspruch 12, dadurch **gekennzeichnet,** daß zumindest der integrierte Schaltkreis (4) oder auch die elektrisch leitenden Verbindungen samt Schaltkreis von einer Vergußmasse (6) umgeben sind.

14. Elektronisches Modul nach Anspruch 13, dadurch **gekennzeichnet,** daß die über die Vergußmasse (6) hinausragende Spule (2) derart abgewinkelt ist, daß sie auf der Vergußmasse (6) liegt.

15. Elektronisches Modul nach Ansprüchen 7 - 14, dadurch **gekennzeichnet,** daß neben der Spule auch Kontaktflächen (39) vorgesehen sind, über die der integrierte Schaltkreis berührend mit externen Geräten kommunizieren kann.

16. Datenträger (1), umfassend einen kartenförmigen Körper mit einem im Kartenkörper angeordneten elektronischen Modul (31 - 35), das einen integrierten Schaltkreis (4) aufweist, der elektrisch leitend mit einer Spule (2, 12, 22) für den berührungslosen Datenaustausch des Datenträgers (1) mit einem Gerät verbunden ist, dadurch **gekennzeichnet,** daß ein elektronisches Modul (31 - 35) gemäß Anspruch 1 oder 7 im Kartenkörper in an sich bekannter Weise eingebaut ist.
